# EUROPEAN PATENT APPLICATION

(11) **EP 4 648 395 A1**
(43) Date of publication of application: **12.11.2025**
(21) Application number: 24813842.2
(22) Date of filing: 21.03.2024
(51) Int. Cl.: H04M 1/725

(54) **INTERFACE DISPLAY METHOD AND TERMINAL DEVICE**

(30) Priority: 26.05.2023 CN 202310615698
(71) Applicant: Honor Device Co., Ltd., Shenzhen, Guangdong 518040 (CN)
(72) Inventor: JIN, Jiaojiao, Shenzhen, Guangdong 518040 (CN)
(74) Representative: Gill Jennings & Every LLP
(86) International application number: PCT/CN2024/083122
(87) International publication number: WO 2024/244636

(57) **Abstract**

This application provides an interface display method and a terminal device, and relates to the field of call technologies. The method can provide, when a terminal device is in an airplane mode and a target number dialed by a user is a non-emergency number, the user with an entry to quickly disable the airplane mode, thereby simplifying a user operation. The method includes: displaying a first interface at a first time point, where the first interface includes a dialing button and a first icon, and the first icon indicates that the terminal device is in the airplane mode; in response to an operation of entering the target number in the first interface by the user, displaying the target number in the first interface, where the target number is a non-emergency number; displaying a second interface in response to an operation of tapping the dialing button in the first interface by the user, where the second interface includes prompt information and a first option, and the prompt information is used to prompt to disable the airplane mode; and displaying a third interface in response to an operation of tapping the first option in the second interface by the user, where the third interface does not include the first icon.

## Description

This application claims priority to Chinese Patent Application No. 202310615698.7, filed with the China National Intellectual Property Administration on May 26, 2023 and entitled "INTERFACE DISPLAY METHOD AND TERMINAL DEVICE", which is incorporated herein by reference in its entirety.

### TECHNICAL FIELD

This application relates to the field of call technologies, and in particular, to an interface display method and a terminal device.

### BACKGROUND

With development of communication technologies, terminal devices have become a most important tool for people to communicate. A mobile phone is used as an example. When the mobile phone is in an airplane mode, if the mobile phone detects that a user is dialing an emergency number (for example, 119 or 120), the airplane mode can be automatically disabled and an emergency call can be initiated. If the mobile phone detects that the user is dialing a non-emergency number, the user is reminded to disable the airplane mode to make a call. In this case, if the user needs to exit the call and independently disable the airplane mode, call efficiency is reduced and user experience is greatly affected.

### SUMMARY

Embodiments of this application provide an interface display method and a terminal device, to simplify an operation of disabling an airplane mode by a user and improve user experience.

To achieve the foregoing objective, the following technical solutions are used in the embodiments of this application.

According to a first aspect, the application provides an interface display method, applied to a terminal device. The method includes: displaying a first interface at a first time point, where the first interface includes a dialing button and a first icon, and the first icon indicates that the terminal device is in an airplane mode; in response to an operation of entering a target number in the first interface by a user, displaying the target number in the first interface, where the target number is a non-emergency number; displaying a second interface in response to an operation of tapping the dialing button in the first interface by the user, where the second interface includes prompt information and a first option, and the prompt information is used to prompt to disable the airplane mode; obtaining a description in a disconnect cause at a second time point after the user taps the dialing button, where the description in the disconnect cause is null, between the first time point and the second time point, the terminal device is in the airplane mode, and receives only one operation of tapping the dialing button by the user, and the second time point is later than the first time point; and displaying a third interface in response to an operation of tapping the first option in the second interface by the user, where the third interface does not include the first icon. That the third interface does not include the first icon is used to indicate that the terminal device is not in the airplane mode.

The first time point is a time point at which the first interface is displayed, the second time point is a time point at which the description in the disconnect cause is obtained, and the first time point and the second time point each may be any time point. That is, when the terminal device is in the airplane mode and the target number dialed by the user is a non-emergency number, the terminal device may display the second interface that includes the first option. In this way, the user can quickly disable the airplane mode by using the first option. In addition, based on the description in the disconnect cause being null, the terminal device does not display again a pop-up box of a preset application to remind the user to disable the airplane mode, to avoid inconvenience caused to the user because the terminal reminds the user to disable the airplane mode a plurality of times.

In an implementation provided in the first aspect, the third interface includes the target number and a second icon, and the second icon indicates that the terminal device accesses an operator network. That is, after the user taps the dialing button, the terminal device may directly display the third interface for the user to quickly redial the target number, without a need for the user to re-enter the target number.

In an implementation provided in the first aspect, the method further includes: obtaining a reason value in the disconnect cause, where the reason value in the disconnect cause is POWER OFF. That is, the disconnect cause includes the description (value), and may further include the reason value. When the terminal device is in the airplane mode and the target number dialed by the user is a non-emergency number, the terminal device may set the disconnect cause to POWER OFF.

In an implementation provided in the first aspect, the first interface is an interface of a dialing application, and the displaying a second interface in response to an operation of tapping the dialing button in the first interface by the user includes: in response to the operation of tapping the dialing button in the first interface by the user, displaying the second interface when the target number is a non-emergency number, the terminal device is in the airplane mode, and the dialing application is a preset application.

In an implementation provided in the first aspect, after the displaying a second interface, the method further includes: setting the description in the disconnect cause to null.

In an implementation provided in the first aspect, the displaying a second interface in response to an operation of tapping the dialing button in the first interface by the user includes: creating a connection object in response to the operation of tapping the dialing button in the first interface by the user; generating the disconnect cause based on a connection object creation failure, where the description in the disconnect cause includes the prompt information; and displaying the second interface based on the description in the disconnect cause when the dialing application is the preset application.

In an implementation provided in the first aspect, the connection object creation failure is based on the target number being an emergency number and the terminal device being in the airplane mode.

In an implementation provided in the first aspect, the method further includes: setting the description in the disconnect cause to a preset value when the dialing application is not the preset application or the terminal device is not in the airplane mode.

In an implementation provided in the first aspect, the terminal device does not display a second pop-up box based on the description in the disconnect cause being null, and the second pop-up box is a pop-up box of the preset application.

According to a second aspect, this application further provides an interface display method, applied to a terminal device. The method includes: during a call on the terminal device, in response to receiving an operation of enabling an airplane mode by a user, enabling the airplane mode and ending the call; displaying a first pop-up box if a dialing application is a preset application, where the first pop-up box includes a first option; disabling the airplane mode in response to a tap operation performed by the user on the first option; obtaining a disconnect cause after displaying the first pop-up box, where a description in the disconnect cause is null; and not displaying a second pop-up box in response to determining that the description in the disconnect cause is null, where the second pop-up box does not include an option for disabling the airplane mode.

According to a third aspect, this application provides an interface display method, applied to a terminal device. The method includes: displaying a dialing interface, where the dialing interface is an interface of a dialing application, and the dialing interface includes a dialing button and a target number entered by a user; displaying, in response to an operation of tapping the dialing button by the user, a first pop-up box when the target number is a non-emergency number, the terminal device is in an airplane mode, and the dialing application is a preset application, where the first pop-up box includes a first option; disabling the airplane mode in response to a tap operation performed by the user on the first option; obtaining a disconnect cause after displaying the first pop-up box, where a description in the disconnect cause is null; and not displaying a second pop-up box in response to determining that the description in the disconnect cause is null, where the second pop-up box does not include an option for disabling the airplane mode.

In an implementation provided in the third aspect, the method further includes: creating a connection object in response to the operation of tapping the dialing button by the user; and generating the disconnect cause when failing to create a connection object.

In an implementation provided in the third aspect, the failing to create a connection object includes: failing to create a connection object when the target number is an emergency number and the terminal device is in the airplane mode.

In an implementation provided in the third aspect, the generating the disconnect cause includes: setting the description in the disconnect cause to null when the dialing application is the preset application.

In an implementation provided in the third aspect, the generating the disconnect cause further includes: setting the description in the disconnect cause to a preset value when the dialing application is not the preset application or the terminal device is not in the airplane mode.

In an implementation provided in the third aspect, the displaying, in response to an operation of tapping the dialing button by the user, a first pop-up box when the target number is a non-emergency number, the terminal device is in an airplane mode, and the dialing application is a preset application includes: displaying a call interface in response to the operation of tapping the dialing button by the user, where when the target number is a non-emergency number, the terminal device is in the airplane mode, and the dialing application is the preset application, the call interface includes the first pop-up box.

According to a fourth aspect, this application further provides a terminal device. The terminal device includes a memory and one or more processors. The memory is coupled to the processor. The memory is configured to store computer program code, and the computer program code includes computer instructions. When the computer instructions are executed by the processor, the terminal device is enabled to perform the method in any implementation of the first aspect to the third aspect.

According to a fifth aspect, this application further provides a computer-readable storage medium, including computer instructions. When the computer instructions are run on a terminal device, the terminal device is enabled to perform the method in any implementation of the first aspect to the third aspect.

According to a sixth aspect, this application provides a computer program product. When the computer program product is run on a terminal device, the terminal device is enabled to perform the method in any implementation of the first aspect to the third aspect.

According to a seventh aspect, this application provides a chip system. The chip system includes one or more interface circuits and one or more processors. The interface circuit and the processor are interconnected through a line. The chip system may be applied to a terminal device that includes a communication module and a memory. The interface circuit is configured to: receive a signal from the memory of the terminal device, and send the received signal to the processor. The signal includes computer instructions stored in the memory. When the processor executes the computer instructions, the terminal device may perform the method in any implementation of the first aspect to the third aspect.

For technical effects brought by any implementation of the second aspect to the seventh aspect, refer to the technical effects brought by different design manners of the first aspect. Details are not described herein again.

### BRIEF DESCRIPTION OF DRAWINGS

FIG. 1A, FIG. 1B, and FIG. 1C are a schematic diagram of an application scenario according to an embodiment of this application;
FIG. 2A, FIG. 2B, and FIG. 2C are a schematic diagram of a process of disabling an airplane mode according to an embodiment of this application;
FIG. 3 is a schematic diagram of a structure of a terminal device according to an embodiment of this application;
FIG. 4 is a block diagram of a software architecture of a terminal device according to an embodiment of this application;
FIG. 5A, FIG. 5B, and FIG. 5C are a schematic diagram of an application scenario according to an embodiment of this application;
FIG. 6A and FIG. 6B are a schematic diagram of an interface according to an embodiment of this application;
FIG. 7A, FIG. 7B, and FIG. 7C are a schematic diagram of another application scenario according to an embodiment of this application;
FIG. 8A and FIG. 8B are a schematic flowchart 1 of an interface display method according to an embodiment of this application;
FIG. 9A, FIG. 9B, and FIG. 9C are a schematic flowchart 2 of an interface display method according to an embodiment of this application; and
FIG. 10 is a schematic diagram of a structure of a chip system according to an embodiment of this application.

### DESCRIPTION OF EMBODIMENTS

The technical solutions in the embodiments of this application are described below with reference to the accompanying drawings in the embodiments of this application. In descriptions of the embodiments of this application, terms used in the following embodiments are merely intended to describe particular embodiments, and are not intended to limit this application. As used in the specification and the appended claims of this application, the singular expressions "a/an", "the", "the foregoing", "this", and "the one" are intended to include expressions such as "one or more", unless otherwise clearly indicated in the context. It should be further understood that in the following embodiments of this application, "at least one" and "one or more" mean one or at least two (including two). The term "and/or" is used to describe an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects.

Reference to "one embodiment", "some embodiments", or the like described in this specification means that a specific feature, structure, or characteristic described with reference to this embodiment is included in one or more embodiments of this application. Therefore, statements "in an embodiment", "in some embodiments", "in some other embodiments", "in some additional embodiments", and the like appearing at different positions in this specification do not necessarily refer to a same embodiment, but mean "one or more but not all embodiments", unless otherwise specifically emphasized in another manner. The terms "include", "comprise", "have", and variants thereof mean "including but not limited to", unless otherwise specifically emphasized in another manner. The term "connection" includes a direct connection and an indirect connection, unless otherwise specified. The terms "first" and "second" are used only for the purpose of description, and shall not be understood as an indication or implication of relative importance or an implicit indication of a quantity of indicated technical features.

In the embodiments of this application, the word such as "example" or "for example" is used to represent giving an example, an illustration, or a description. Any embodiment or design solution described as an "example" or "for example" in the embodiments of this application should not be explained as being more preferred or having more advantages than another embodiment or design solution. Exactly, use of the words such as "example" or "for example" is intended to present a related concept in a specific manner.

When a mobile phone is in an airplane mode, if the mobile phone detects that a user is dialing a non-emergency number, the user is reminded to disable the airplane mode to make a call. Because Google^{™} Dialer (Google Dialer) is used on some terminal devices, users need to exit the call and disable the airplane mode in the foregoing scenario before the users can normally dial non-emergency numbers. This is very inconvenient for the users. Google^{™} Dialer is an application with dialing, calling, and contact functions. When detecting, in the airplane mode, that the user is dialing a non-emergency number, Google^{™} Dialer displays a pop-up box to remind the user to disable the airplane mode. Google^{™} Dialer can also be referred to as a first dialer, a native dialer, a preset application, or the like.

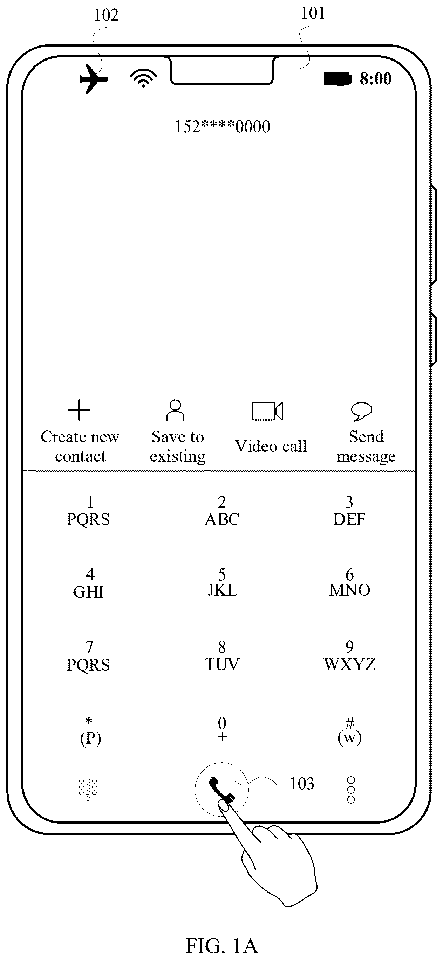

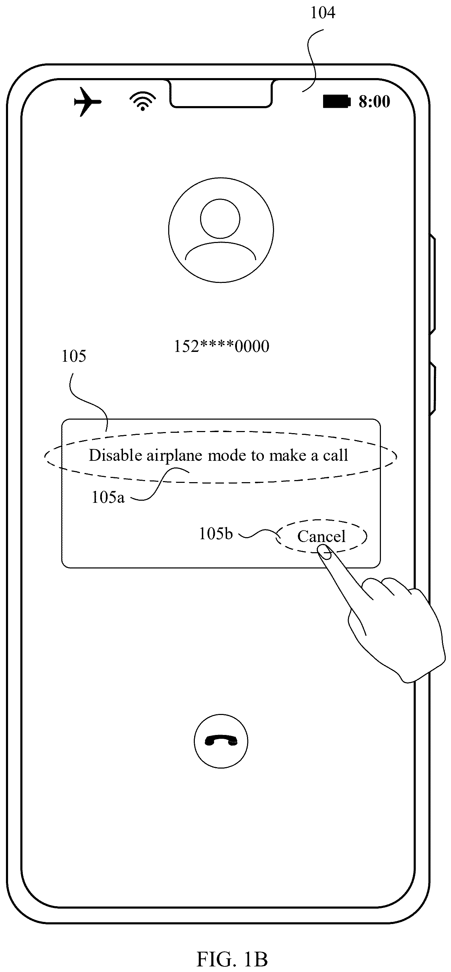

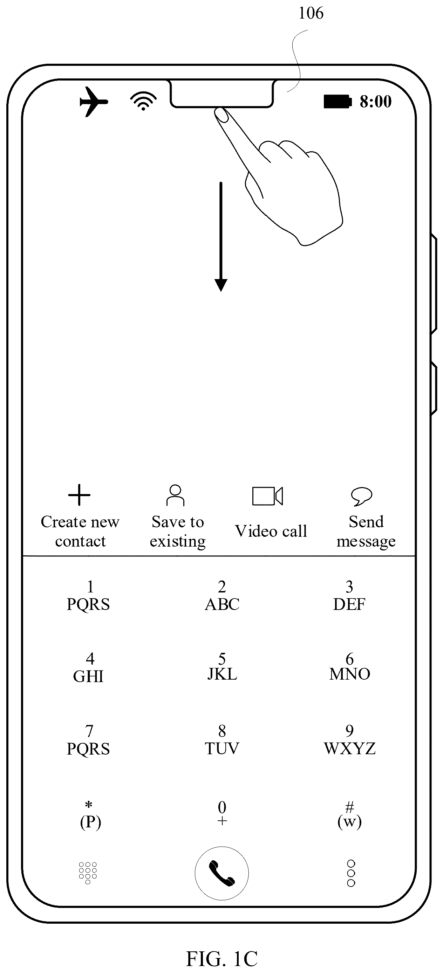

An application scenario of this application is described below with reference to the accompanying drawings. As shown in FIG. 1A, a mobile phone may display an interface 101. The interface 101 may be a dialing interface of Google^{™} Dialer. In addition, an icon 102 in the interface 101 indicates that the mobile phone is in an airplane mode. The interface 101 further includes a dialing button 103 and a non-emergency number (for example, 152****0000) entered by a user. Optionally, the interface 101 may further include a dial pad for the user to enter a number. In response to an operation performed by the user on the dialing button 103, the mobile phone may display an interface 104. As shown in FIG. 1B, the interface 104 includes a pop-up box 105, and the pop-up box 105 includes reminder information 105a and a "Cancel" option 105b. The reminder information 105a is used to remind the user to disable the airplane mode to make a call. The "Cancel" option 105b is used to cancel a call and close the pop-up box 105. In response to an operation performed by the user on the "Cancel" option 105b, the mobile phone may close the pop-up box 105, and redisplay an interface of Google^{™} Dialer. The interface of Google^{™} Dialer may be an interface 106 shown in FIG. 1C. Through comparison between the interface 106 and the interface 101, it may be learned that the interface 106 does not include the non-emergency number entered by the user.

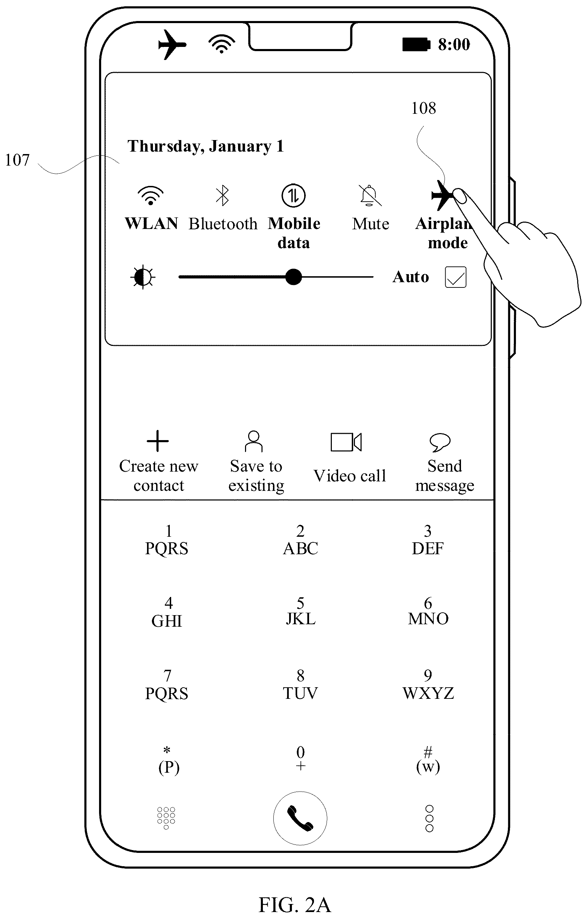

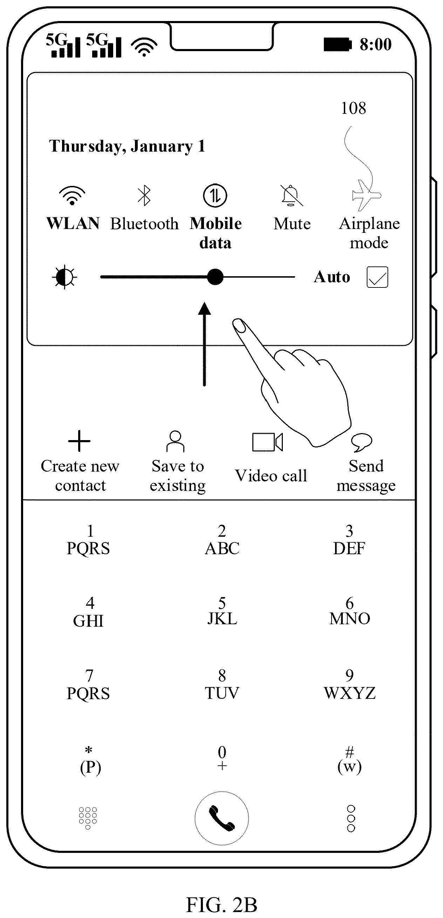

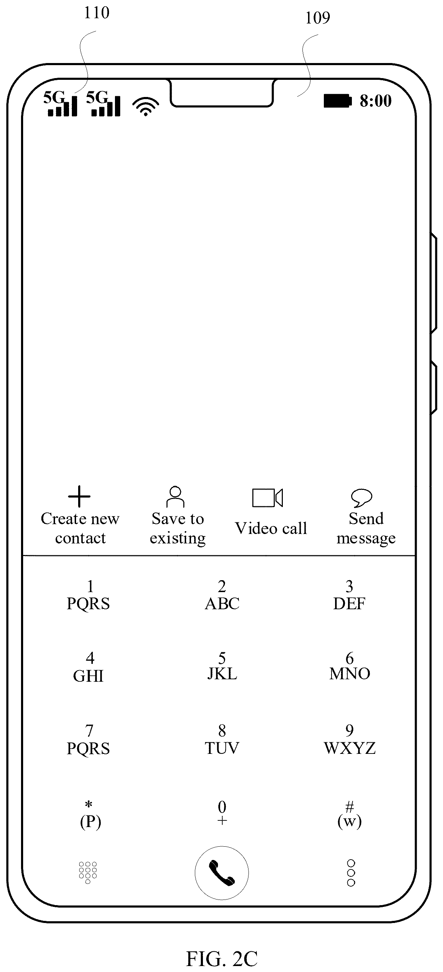

In an implementation, the user may disable the airplane mode. For example, the user may pull down a top of the interface 106. In response to an operation of pulling down the top of the interface 106 by the user, the mobile phone may display a pull-down notification bar 107. As shown in FIG. 2A, the pull-down notification bar 107 includes icons of options such as mute, Bluetooth, and airplane mode 108. The icon of the airplane mode 108 indicates that the mobile phone enables the airplane mode. The mobile phone may receive an operation performed by the user on the option of airplane mode 108, and in response to the operation, the mobile phone disables the airplane mode. In addition, as shown in FIG. 2B, the mobile phone may further update the icon of the airplane mode 108 to a state indicating that the airplane mode is disabled. On this basis, the user may close the pull-down notification bar 107 (for example, slide the pull-down notification bar 107 upward) and make a call again. For example, in response to an operation of closing the pull-down notification bar 107 by the user, the mobile phone may redisplay an interface of the dialer. For example, the interface of the dialer may be an interface 109 shown in FIG. 2C, and may be used by the user to dial a number again. An icon 110 in the interface 109 is used to indicate that the mobile phone accesses an operator network, that is, the mobile phone disables the airplane mode.

It may be learned that in the foregoing scenario, to disable the airplane mode and make a call again, the user needs to perform at least four steps of closing the pop-up box 105, entering an entry (for example, the pull-down notification bar 107) of setting the airplane mode, disabling the airplane mode, and returning to the dialing interface. The operation is relatively cumbersome.

In view of this, embodiments of this application provide an interface display method. When a terminal device is in an airplane mode, if an operation of calling a non-emergency number by a user is received, a first pop-up box may be displayed. The first pop-up box includes a "Disable" option. In response to an operation performed by the user on the "Disable" option, the terminal device may directly disable the airplane mode, so that the user continues to perform a call operation. In the embodiments of this application, the airplane mode is directly disabled by using the "Disable" option, to simplify a user operation and improve user experience.

It should be noted that the terminal device provided in the embodiments of this application may be a device such as a mobile phone, a tablet computer, a computer, a notebook computer, a netbook computer, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the terminal device is not specifically limited in the embodiments of this application.

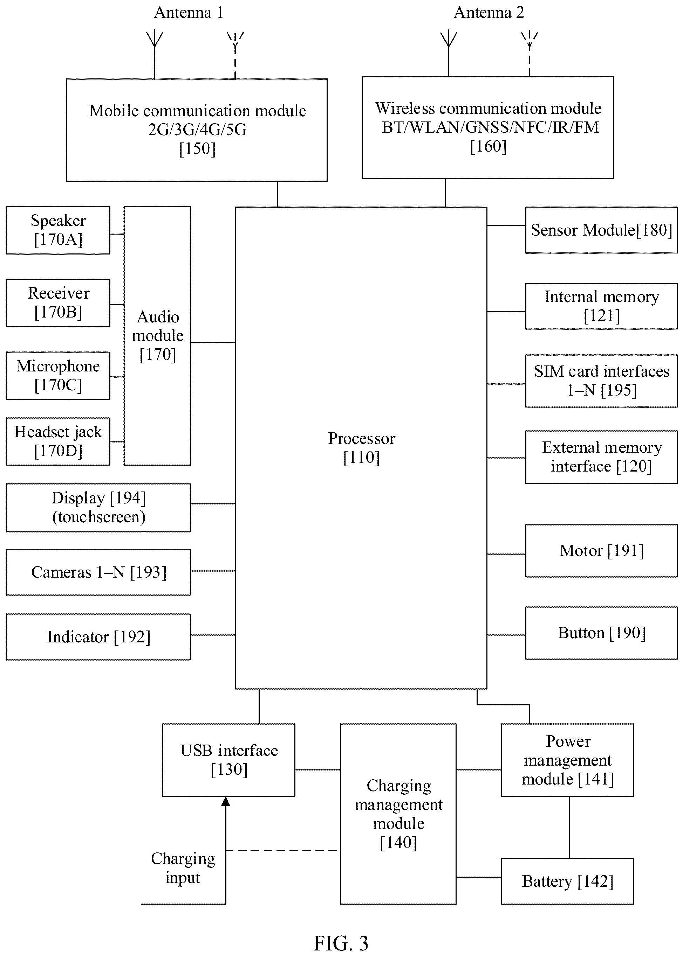

FIG. 3 is a schematic diagram of a structure of a terminal device according to an embodiment of this application. As shown in FIG. 3, the terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a neural center and a command center of the terminal device. The controller may generate an operation control signal based on an instruction operation code and a time sequence signal, to complete control of instruction fetching and instruction execution.

A memory may further be disposed in the processor 110, to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

It may be understood that the interface connection relationship between the modules shown in this embodiment is merely an example, and does not constitute a limitation on the structure of the terminal device. In some other embodiments, the terminal device may alternatively use an interface connection manner different from that in the foregoing embodiment, or a combination of a plurality of interface connection manners.

The charging management module 140 is configured to receive a charging input from a charger. The charger may be a wireless charger or a wired charger. The charging management module 140 may supply power to the terminal device through the power management module 141 while charging the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. In some embodiments, the power management module 141 and the charging management module 140 may alternatively be disposed in a same component.

A wireless communication function of the terminal device may be implemented by using the antenna 1, the antenna 2, the mobile communication module 150, the wireless communication module 160, the modem processor, the baseband processor, and the like. In some embodiments, in the terminal device, the antenna 1 is coupled to the mobile communication module 150, and the antenna 2 is coupled to the wireless communication module 160, so that the terminal device may communicate with a network and another device by using a wireless communication technology.

The antenna 1 and the antenna 2 are configured to transmit and receive an electromagnetic wave signal. Each antenna in the terminal device may be configured to cover one or more communication frequency bands. Different antennas may be multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the terminal device and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation.

The mobile communication module 150 may further amplify a signal obtained after modulation by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The wireless communication module 160 may provide a wireless communication solution that is applied to the terminal device and that includes a WLAN (for example, a (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like.

The wireless communication module 160 may be one or more components into which at least one communication processing module is integrated. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The terminal device implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel.

The terminal device may implement a shooting function by using the ISP, the camera 193, the video codec, the GPU, the display 194, the application processor, and the like. The ISP is configured to process data fed back by the camera 193. The camera 193 is configured to capture a still image or a video. In some embodiments, the terminal device may include 1 or N cameras 193, where N is a positive integer greater than 1.

The external memory interface 120 may be configured to be connected to an external memory card such as a Micro SD card, to expand a storage capacity of the terminal device. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various functional applications and data processing of the terminal device. For example, in this embodiment of this application, the processor 110 may execute the instructions stored in the internal memory 121. The internal memory 121 may include a program storage area and a data storage area.

The program storage area may store an operating system, an application required by at least one function (for example, a voice play function or an image play function), and the like. The data storage area may store data (such as audio data and an address book) created during use of the terminal device, and the like. In addition, the internal memory 121 may include a high-speed random access memory, and may further include a nonvolatile memory, for example, at least one magnetic disk storage device, a flash memory, and a universal flash storage (universal flash storage, UFS).

The terminal device may implement an audio function, for example, music playing and recording, by using the audio module 170, the speaker 170A, the receiver 170B, the microphone 170C, the headset jack 170D, the application processor, and the like. The key 190 includes a power on/off key, a volume key, or the like. The key 190 may be a mechanical key, or may be a touch key. The motor 191 may generate a vibration prompt. The motor 191 may be configured to provide a vibration prompt for an incoming call, and may be further configured to provide vibration feedback for a touch. The indicator 192 may be an indicator light, and may be configured to indicate a charging status and a power change, or may be configured to indicate a message, a missed call, a notification, and the like. The SIM card interface 195 is configured to be connected to a SIM card. The SIM card may be inserted into the SIM card interface 195 or removed from the SIM card interface 195, to come into contact with or be separated from the terminal device. The terminal device may support one or N SIM card interfaces, where N is a positive integer greater than 1. The SIM card interface 195 may support a Nano SIM card, a Micro SIM card, a SIM card, and the like.

The sensor module 180 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that, the structure shown in this embodiment does not constitute a specific limitation on the terminal device. In some other embodiments, the terminal device may include more or fewer components than those shown in the figure, or some components may be combined, or some components may be split, or a different component deployment may be used. The component shown in the figure may be implemented by hardware, software, or a combination of software and hardware.

A software system of the terminal device may use a layered architecture, an event-driven architecture, a microkernel architecture, a micro-service architecture, or a cloud architecture. An example of a software structure of the terminal device is described herein.

The layered architecture divides software into several layers, and each layer has a clear function and division of labor. The layers communicate with each other through an interface. In some embodiments, the terminal device may include an application layer, an application framework layer, and a hardware abstraction layer (hardware abstraction layer, HAL). It should be noted that an example is used for description in this embodiment of this application. In different operating systems (for example, an Android^{™} system and an IOS system), the solutions of this application can still be implemented provided that the functions implemented by the functional modules are similar to those in the embodiments of this application.

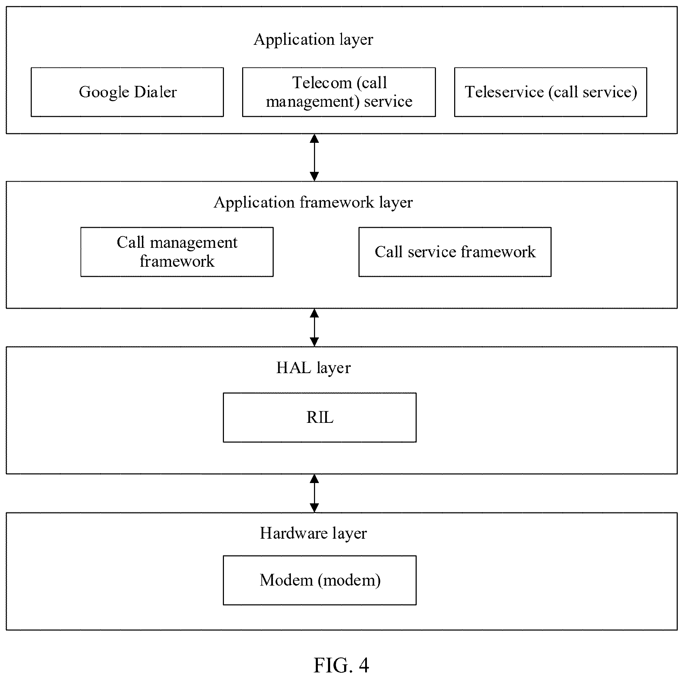

The application layer may include a series of applications. As shown in FIG. 4, the application layer may include applications such as a dialer (dialer), a call management (telecom) service, and a call service (teleservice). Optionally, the application layer may further include applications such as Settings, Gallery, Calendar, and Call. This is not limited in this application.

The dialer is an application with dialing, calling, and contact functions, and a user may perform operations such as dialing, calling, and contact management by using the application.

The call management service is used to manage a call (also referred to as a call), for example, display an incoming call, answer a call, and hang up a call.

The call service may interact with the HAL layer, to implement a basic call function. The call service may further interact with the call management service, to receive a dialing request initiated by the dialer through the call management service, send incoming call information reported by an underlying modem (modem) to the dialer through the call management service, or the like.

The application framework layer provides an application programming interface (application programming interface, API) and a programming framework for the applications at the application layer. The application framework layer includes some predefined functions, for example, may include a call management framework (telecom framework) and a call service framework (teleservice framework). The call management framework is used to provide services and interfaces related to call management. The call service framework is used to provide interfaces and services related to a call service.

The HAL layer is a package for a Linux kernel driver, provides an interface to a higher-level layer, and shields implementation details of underlying hardware. In this embodiment of this application, the HAL layer may include a radio interface layer (radio interface layer, RIL). The RIL is an abstraction layer between the call service framework and the modem, and may be responsible for reliable data transmission, managing a response between the call service framework and the modem, controlling a driver of the modem, transmitting information and instructions actively reported by the modem, and the like.

A hardware layer includes the modem configured to implement functions such as calling and internet access.

The interface display method provided in the embodiments of this application is described below by using an example in which the terminal device is a mobile phone.

In an optional implementation, the mobile phone may display a dialing interface (which may also be referred to as a first interface). The dialing interface is an interface of a dialing application (which may also be referred to as a dialer). The dialing interface includes a dialing button and a target number entered by a user.

In response to an operation of tapping the dialing button by the user, a first pop-up box is displayed when the target number is a non-emergency number, the terminal device is in an airplane mode, and the dialing application is a preset application. The first pop-up box includes a first option. The first option may be used to disable the airplane mode.

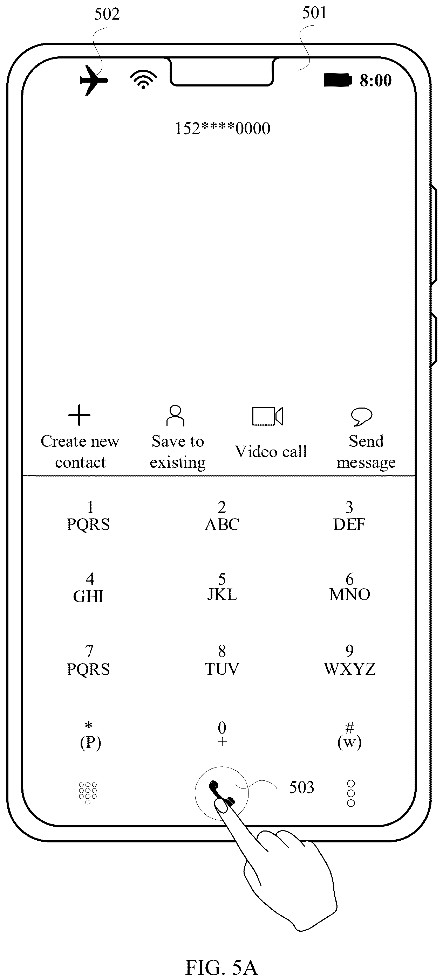

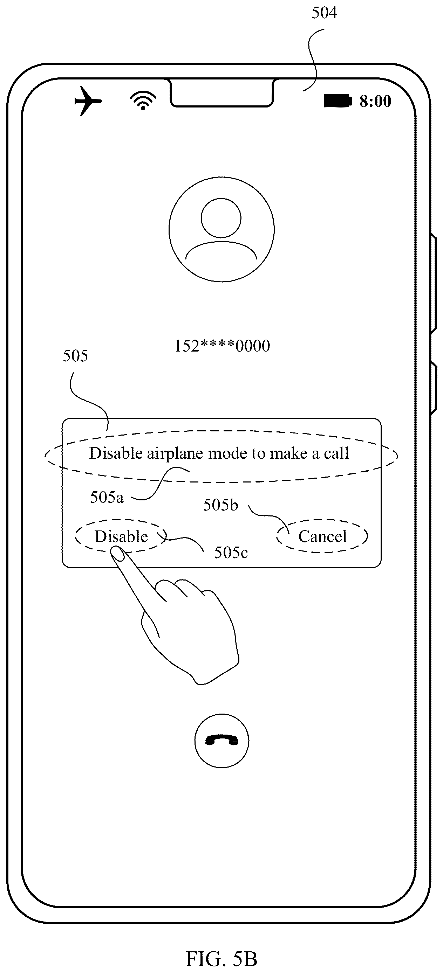

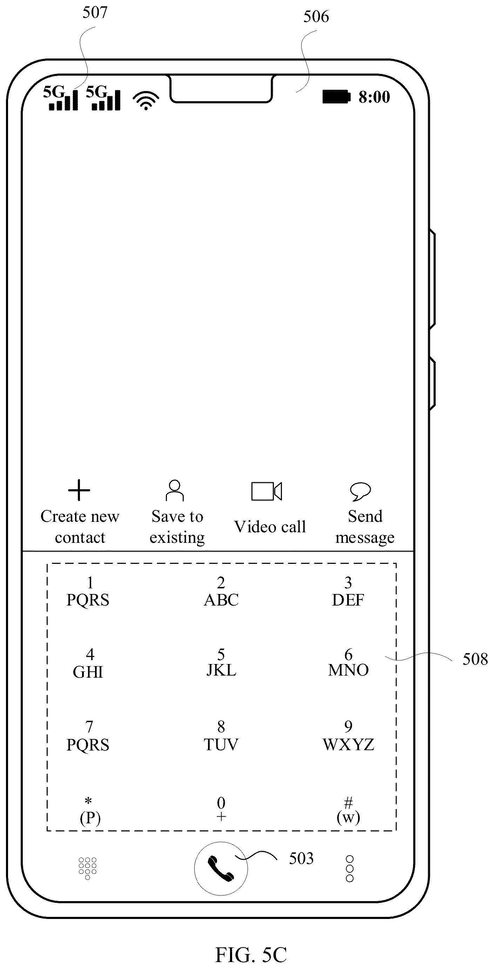

For example, the dialing interface may be an interface 501 shown in FIG. 5A. The interface 501 may be an interface of Google^{™} Dialer (that is, the dialing application). In addition, an icon 502 (which may also be referred to as a first icon) in the interface 501 indicates that the mobile phone is in the airplane mode. The interface 501 further includes a dialing button 503, a non-emergency number (for example, 152****0000) entered by the user, a dial pad for the user to enter a number, and the like. In response to an operation performed by the user on the dialing button 503, the mobile phone may display an interface 504 (which may also be referred to as a second interface). As shown in FIG. 5B, the interface 504 includes a pop-up box 505 (that is, the first pop-up box), and the pop-up box 505 includes reminder information 505a, a "Cancel" option 505b, and a "Disable" option 505c (that is, the first option). The user may disable the airplane mode by tapping the "Disable" option 505c, in response to a tap operation performed by the user on the "Disable" option 505c, an interface 506 (which may also be referred to as a third interface) is displayed. As shown in FIG. 5C, the interface 506 includes an icon 507, a dial pad 508, and the dialing button 503. The icon 507 is used to indicate that the mobile phone accesses an operator network, and the interface 506 does not include the icon 502, indicating that the mobile phone disables the airplane mode (is not in the airplane mode). The user may re-enter the target number by using the dial pad 508 and operate the dialing button 503 to call the target number. After the user taps the "Disable" option 505c, the mobile phone disables the airplane mode.

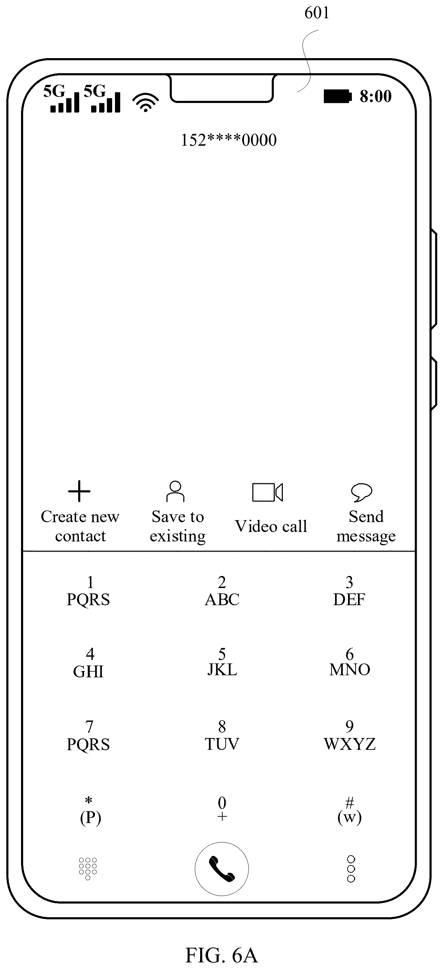

Optionally, in response to an operation performed by the user on the "Disable" option 505c, the mobile phone disables the airplane mode, and displays an interface 601 shown in FIG. 6A. A difference between the interface 601 and the interface 506 is that the interface 601 further includes the non-emergency number in the interface 501. In this way, the user can directly make a call without re-entering the number, to simplify a dialing operation of the user.

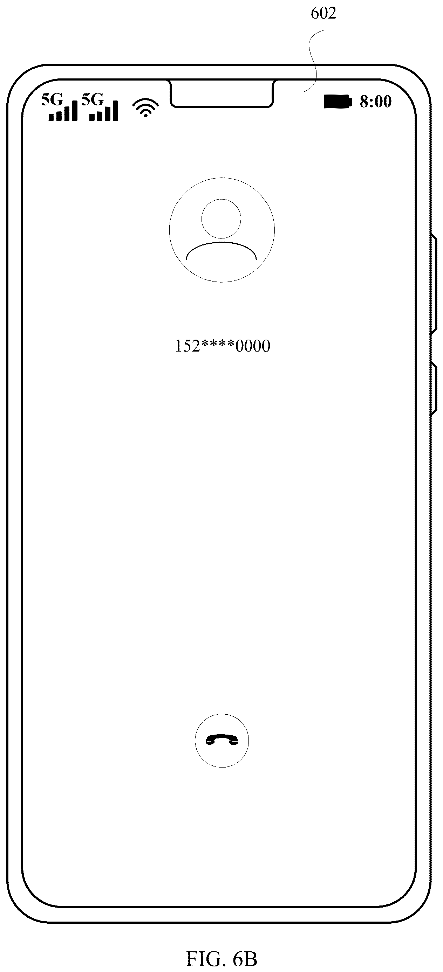

Optionally, in response to an operation performed by the user on the "Disable" option 505c, the mobile phone disables the airplane mode and calls the non-emergency number previously entered by the user. In addition, the mobile phone may further display an interface 602 shown in FIG. 6B. The interface 602 indicates that the mobile phone is calling the non-emergency number entered by the user. This manner does not require the user to re-enter the number and perform dialing again, and is more simple and convenient.

It should be noted that after detecting the operation performed by the user on the "Disable" option 505c, the mobile phone may further display another interface. This is not specifically limited herein provided that the mobile phone can disable the airplane mode in response to the operation performed by the user on the "Disable" option 505c.

In another optional implementation, if the mobile phone receives an operation of enabling an airplane mode by a user while being on a call, the mobile phone may also display a first pop-up box. The call is a call between a number of the mobile phone and a non-emergency number.

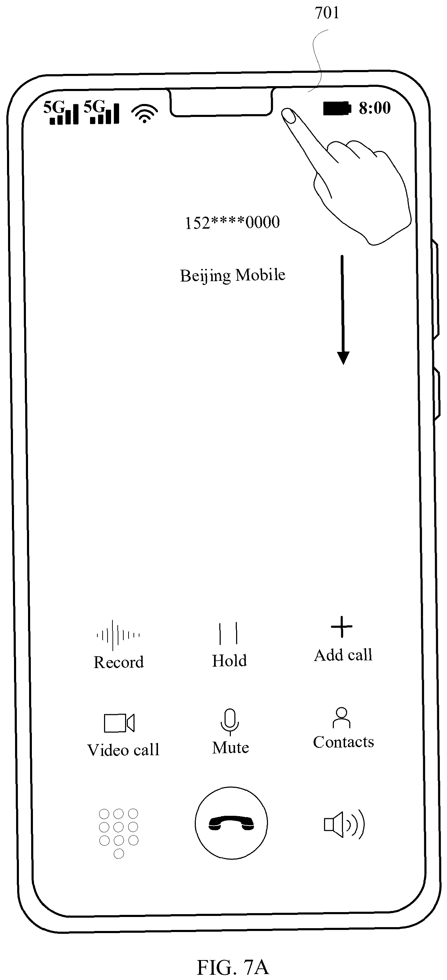

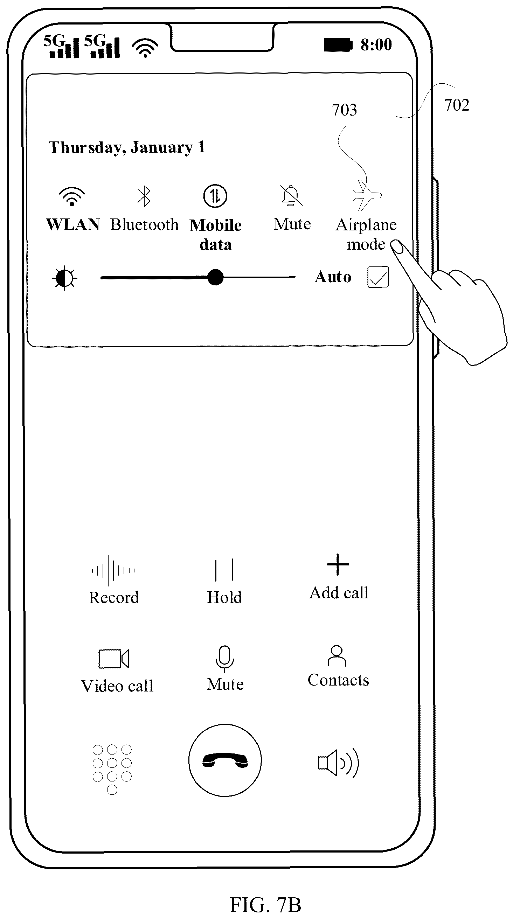

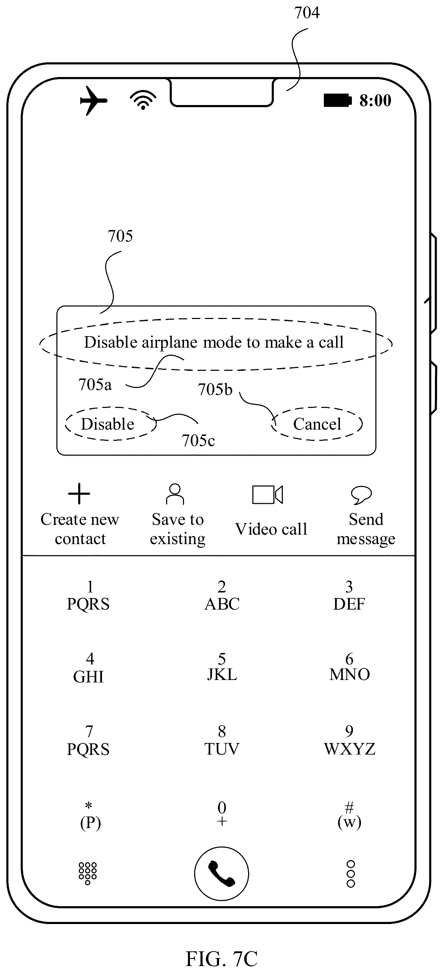

For example, as shown in FIG. 7A, the mobile phone may display an interface 701, and the interface 701 indicates that the mobile phone is calling a target number (for example, 152****0000). Optionally, the interface 701 may further include icons of options such as record, hold, add, and hang up. In response to an operation of pulling down a top of the interface 701 by the user, the mobile phone may display a pull-down notification bar 702. As shown in FIG. 7B, the pull-down notification bar 702 includes icons of options such as mute, Bluetooth, and airplane mode 703. The icon of the airplane mode 703 indicates that the mobile phone does not enable the airplane mode. In response to an operation performed by the user on the icon of the airplane mode 703, the mobile phone may enable the airplane mode, hang up a call, and display an interface 704. As shown in FIG. 7C, the interface 704 is an interface of a dialer application, the interface 704 further includes a pop-up box 705 (that is, the first pop-up box), and the pop-up box 705 includes reminder information 705a, a "Cancel" option 705b, and a "Disable" option 705c. In response to a tap operation performed by the user on the "Disable" option 705c, the mobile phone disables the airplane mode.

It may be learned that the interface display method provided in the embodiments of this application may be applied to a dialing scenario and a call scenario. Specific implementations of the interface display method provided in the embodiments of this application in the dialing scenario and the call scenario are described below with reference to the accompanying drawings.

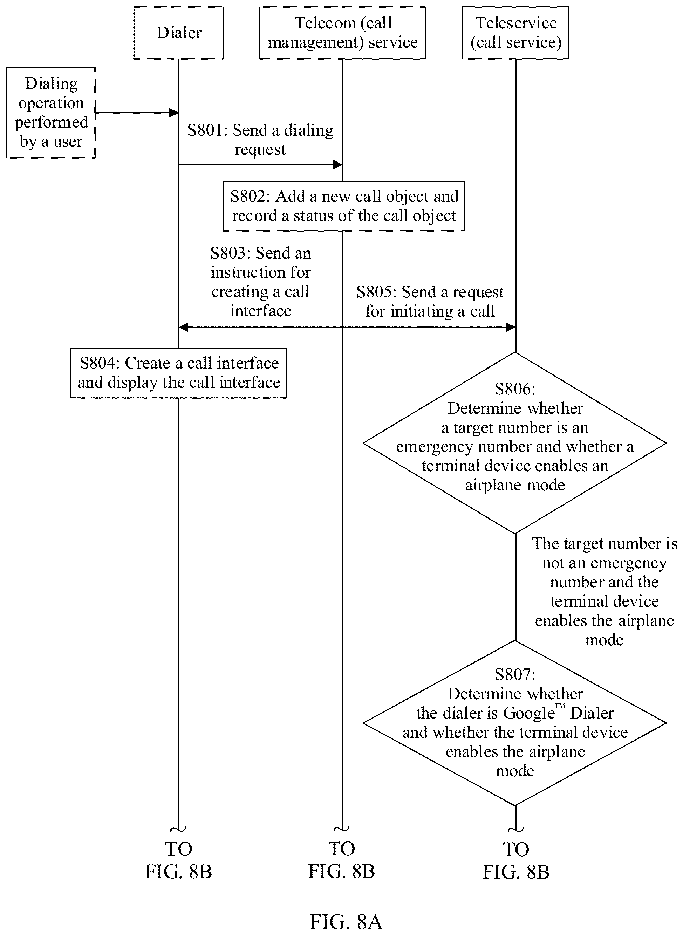

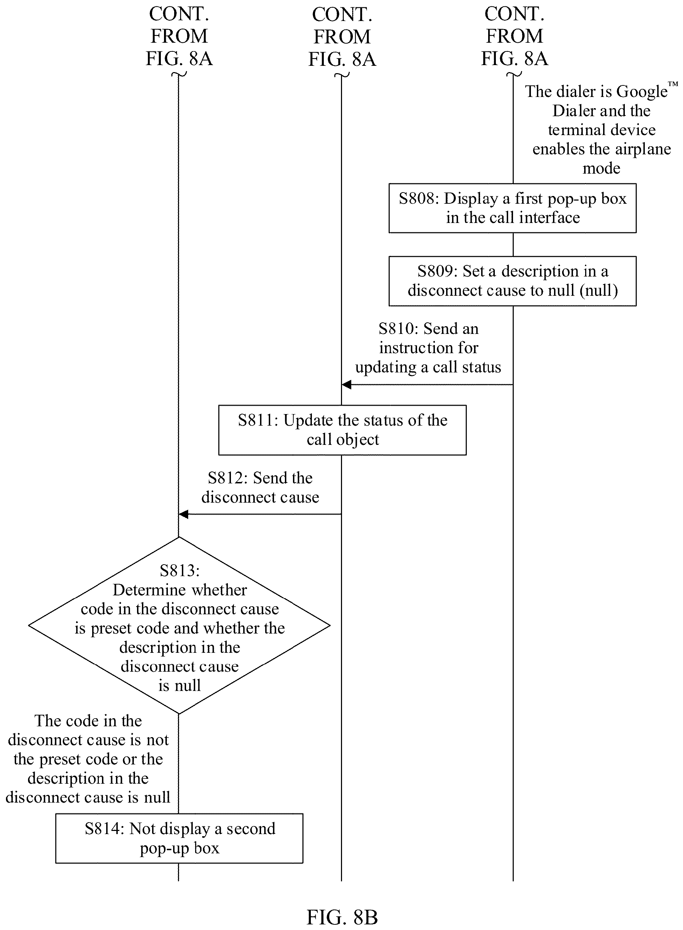

FIG. 8A and FIG. 8B are a schematic flowchart 1 of an interface display method according to an embodiment of this application. The interface display method may be performed by the terminal device shown in FIG. 3, and specifically shows a specific implementation in the dialing scenario shown in FIG. 5A, FIG. 5B, and FIG. 5C. As shown in FIG. 8A and FIG. 8B, the interface display method includes the following steps.

S801: In response to a dialing operation performed by a user, a dialer sends a dialing request to a telecom (call management) service.

The dialing request carries a target number to be called by the user.

For example, the dialing operation performed by the user may be a tap operation performed by the user on the dialing button 503 in FIG. 5A.

It should be noted that in this embodiment of this application, the dialer may deliver the dialing request through a function call.

S802: The telecom service adds a new call object and records a status of the call object.

In response to the dialing request, the telecom service may create a new call object (that is, a call object). The new call object is created to add a new call (call). The call object has a capability to manage a call, including answering, rejecting, holding, hanging up, and the like. The status of the call object may include a status of the call, for example, dialing, not connected, connecting, or hung up. The status of the call object further includes whether a UI is notified for refresh, whether a connection is established, and the like.

Optionally, the telecom service may further allocate a call ID to the call object, to manage the status of the call object.

S803: The telecom service sends an instruction for creating a call interface to the dialer.

The instruction for creating a call interface carries a target number and a call status, and is used to notify the dialer to create a call interface. Optionally, the instruction for creating a call interface may further include the call ID. In an optional implementation, the telecom service may notify, by using an onSuccessfulOutgoingCall() function, the dialer to create a call interface.

S804: The dialer creates a call interface and displays the call interface.

In response to receiving the instruction for creating a call interface, the dialer may create a call interface based on the target number and the call status, and display the call interface. The call interface is used to indicate that a number called by the terminal device is the target number and the call status is dialing.

S805: The telecom service sends a request for initiating a call to a teleservice (call service).

The request for initiating a call carries the target number, and is used to indicate the teleservice to call the target number. In an optional implementation, the telecom service may deliver the request for initiating a call to the teleservice by using a placeoutgoingcall() function.

It should be noted that timing between S803~S804 and S805 is independent of each other. That is, S803~S804 may be performed before S805, may be performed after S805, or may be synchronously performed with S805. This is not specifically limited herein.

In response to receiving the request for initiating a call, the teleservice may create a connection (connection) object, so that the teleservice sends a dialing instruction to a modem through an RIL, to make the modem call the target number. In this embodiment of this application, a process of creating a connection object by the teleservice may include S806~S809. S806 is used to determine whether a connection object can be created, and S807~S809 are used to describe a process of creating a disconnect cause (DisconnectCause) when connection object creation fails. S806~S809 are separately described below.

S806: The teleservice determines whether the target number is an emergency number and whether the terminal device enables an airplane mode.

The emergency number is an emergency telephone number that is set for the convenience of the public to respond to some emergency situations, for example, 110, 119, or 120. The airplane mode is a mode of the terminal device. When enabling the airplane mode, the terminal device does not actively send a paging signal to a base station, and does not respond to a dialing request of the user. That the terminal device enables the airplane mode may be understood as that the terminal device is in the airplane mode, and that the terminal device does not enable (or disables) the airplane mode can be understood as that the terminal device is not in the airplane mode.

In this embodiment of this application, the teleservice may determine, by determining whether the target number is an emergency number and whether the terminal device enables the airplane mode, whether a connection object can be created.

If the target number is not an emergency number (or is a non-emergency number) and the terminal device enables the airplane mode, the teleservice fails to create a connection object. If the target number is an emergency number or the terminal device does not enable the airplane mode, the teleservice successfully creates a connection object, and the teleservice may further send a dialing instruction to the modem through a call service framework and the RIL. The dialing instruction carries the target number. In response to receiving the dialing instruction, the modem calls the target number.

That the target number is an emergency number or the terminal device does not enable the airplane mode may include three cases: (1) The target number is not an emergency number and the terminal device does not enable the airplane mode; (2) The target number is an emergency number and the terminal device does not enable the airplane mode; and (3) The target number is an emergency number and the terminal device enables the airplane mode.

In an optional implementation, emergency number information is prestored in the terminal device, and the emergency number information includes an emergency number preconfigured on the terminal device and/or an emergency number provided by an operator after the terminal device accesses an operator network. The teleservice may determine whether the target number can be queried from the emergency number information. If the teleservice can query the target number from the emergency number information, it can be determined that the target number is an emergency number. If the teleservice cannot query the target number from the emergency number information, it can be determined that the target number is a non-emergency number.

In addition, the teleservice may further determine, based on status information of the airplane mode, whether the terminal device enables the airplane mode. For example, the status information of the airplane mode may include "radio on" and "radio off". If the status information of the airplane mode is "radio on", it indicates that the terminal device does not enable the airplane mode. If the status information of the airplane mode is "radio off", it indicates that the terminal device enables the airplane mode. In another implementation, other information may alternatively be used to indicate "radio on" and "radio off". For example, "0" may be used to indicate "radio off", and "1" may be used to indicate "radio on". This is not specifically limited herein.

It should be noted that S806 indicates that the teleservice needs to determine whether the target number is an emergency number and whether the terminal device enables the airplane mode, and does not limit a sequence of performing the two determining operations. For example, the teleservice may determine whether the target number is an emergency number and whether the terminal device enables the airplane mode, or the teleservice may first determine whether the target number is an emergency number and then determine whether the airplane mode is enabled, or the teleservice may first determine whether the airplane mode is enabled and then determine whether the target number is an emergency number.

In this embodiment of this application, if the target number is not an emergency number and the terminal device enables the airplane mode, the teleservice may perform S807.

In this embodiment of this application, if the target number is not an emergency number and the terminal device enables the airplane mode, the teleservice fails to create a connection object. When failing to create a connection object, the teleservice further needs to create a disconnect cause (DisconnectCause).

In this embodiment of this application, the disconnect cause (DisconnectCause) includes code (code) and a description (description).

The code is code in the disconnect cause, and is used to indicate a specific reason for the disconnection/connection creation failure. For example, the code may be any of "UNKOWN", "ERROR", "LOCAL", "RESTRICTED", and the like. The code "UNKOWN" indicates that the disconnection is caused due to an unknown or unspecified reason. The code "ERROR" indicates that the disconnection is caused due to an error (for example, a network problem). The code "LOCAL" indicates that the disconnection is caused due to an operation (for example, hanging up) initiated by a local user. The code "RESTRICTED" indicates that the disconnection is caused due to a restriction on making a call, for example, dialing in the airplane mode. Different code may be represented by using different values. For example, 0 represents "UNKOWN", 1 represents "ERROR", 2 represents "LOCAL", and 8 represents "RESTRICTED".

The description (description) is a localized description to be displayed to the user to explain the disconnection, for example, "Disable airplane mode to dial a phone number". In this embodiment of this application, the terminal device may first set the description (description) to a preset value, for example, "Disable airplane mode to make a call", so that the dialer subsequently provides a reminder by using a pop-up box based on the description.

Optionally, the disconnect cause (DisconnectCause) may further include information such as a label (label) and a reason value (reason). The label (label) is a localized label to be displayed to the user to explain the disconnection, and the label may be displayed in a user interface. The reason value (reason) is a reason for the disconnection, for example, may be "Make a call in the airplane mode".

In this embodiment of this application, the process of creating the disconnect cause by the teleservice may include S807~S809. S807-S808 are used to determine whether to create and display a first pop-up box, and the first pop-up box is used to remind the user to disable the airplane mode to make a call and provide the user with an entry to quickly disable the airplane mode; and S809 is used to describe how the teleservice sets the information in the disconnect cause. S807~S809 are separately described below.

However, in actual application, not only the teleservice may create DisconnectCause when it is determined that the target number is not an emergency number and the terminal device enables the airplane mode, but also the teleservice creates DisconnectCause in many other cases. For example, the teleservice may be further disconnected when a network failure occurs and create a disconnect cause (that is, the teleservice creates a disconnect cause in response to determining a network failure). For another example, the teleservice may be further disconnected when the user actively hangs up a call and create a disconnect cause (that is, the teleservice creates a disconnect cause in response to a hang-up operation performed by the user).

The first pop-up box in this application is a pop-up box that needs to be displayed only when the dialer is Google^{™} Dialer and the terminal device enables the airplane mode. Therefore, in the process of creating the disconnect cause, the teleservice may first determine whether a condition for displaying the first pop-up box is met.

S807: The teleservice determines whether the dialer is Google^{™} Dialer and whether the terminal device enables the airplane mode.

Although Google^{™} Dialer also displays a pop-up box when the target number is not an emergency number and the terminal device enables the airplane mode, the pop-up box does not include an option for the user to disable the airplane mode, for example, the pop-up box 105 in FIG. 1B.

In an optional implementation, the teleservice may read configuration information of a system to obtain an identifier of the dialer, and determine, by using the identifier of the dialer, whether the dialer is Google^{™} Dialer. For example, the dialer may include Google^{™} Dialer and a dialer independently developed by a manufacturer, an identifier of Google^{™} Dialer may be "1", and an identifier of the dialer independently developed by the manufacturer may be "0". If the identifier of the dialer obtained by the teleservice is "1", it may be determined that the dialer is Google^{™} Dialer. If the identifier of the dialer obtained by the teleservice is "0", it may be determined that the dialer is not Google^{™} Dialer (for example, is the dialer independently developed by the manufacturer).

In addition, the teleservice further needs to determine whether the terminal device enables the airplane mode. For the process of determining whether the terminal device enables the airplane mode, refer to the content in S806. Details are not described herein again.

In this embodiment of this application, if the dialer is Google^{™} Dialer and the terminal device enables the airplane mode, the teleservice may perform S808; or if the dialer is not Google^{™} Dialer or the terminal device does not enable the airplane mode, the teleservice may perform S809.

S808: The teleservice displays the first pop-up box in the call interface.

In response to determining that the dialer is Google^{™} Dialer and the terminal device enables the airplane mode, the teleservice displays the first pop-up box in the call interface. The first pop-up box includes reminder information, a "Cancel" option, and a "Disable" option. The reminder information is used to prompt the user to disable the airplane mode to make a call, the "Disable" option is used to disable the airplane mode, and the "Cancel" option is used to close the first pop-up box.

For example, the first pop-up box may be the pop-up box 505 shown in FIG. 5B, the reminder information may be the reminder information 505a, the "Disable" option may be the "Disable" option 505c, and the "Cancel" option may be the "Cancel" option 505b. In response to a tap operation performed by the user on the "Disable" option 505c, the terminal device disables the airplane mode, for example, may set the status information of the airplane mode to "radio off". In response to a tap operation performed by the user on the "Cancel" option 505b, the terminal device displays an interface of Google^{™} Dialer, for example, the interface 106 shown in FIG. 1C. In addition, after the user taps the "Cancel" option 505b, the terminal device closes the pop-up box 505, that is, does not display the pop-up box 505.

In this embodiment of this application, the teleservice may display the first pop-up box based on the description in the disconnect cause. The reminder information in the first pop-up box may be the description in the disconnect cause, for example, "Disable airplane mode to make a call".

S809: The teleservice sets the description in the disconnect cause to null (null).

That is, if the dialer is Google^{™} Dialer and the terminal device enables the airplane mode, the terminal device may further set the description in the disconnect cause to null (null), to prevent the dialer from reminding, by using a pop-up box, again the user to disable the airplane mode.

In an optional implementation, if the dialer is not Google^{™} Dialer or the terminal device does not enable the airplane mode, the teleservice may not reset the description in the disconnect cause, that is, keep the description in the disconnect cause to be the preset value, so that the dialer subsequently provides a reminder by using a pop-up box based on the description.

Optionally, the teleservice may set the reason value in the disconnect cause to POWER OFF (power off). POWER OFF is used to indicate that the modem is powered off.

In an optional implementation, the disconnect cause (DisconnectCause) may be expressed in a form of [Code:() Label:() Description:() Reason:(radio off)]. For example, the teleservice may create DisconnectCause, and content of DisconnectCause is [Code:(RESTRICTED) Label:() Description:() Reason:(POWER OFF)], where DisconnectCause indicates that disconnect code is "RESTRICTED", the reason value is "POWER OFF", and both the Label (label) and the Description (description) are null.

S810: The teleservice sends an instruction for updating the call status to the telecom service.

The instruction for updating the call status includes the disconnect cause and the call ID.

S811: The telecom service updates the status of the call object.

In response to receiving a connection response, the telecom service may update the status of the corresponding call object based on the disconnect cause and the call ID.

It should be noted that after receiving the connection response, the telecom service may print a log. The disconnect cause received by the telecom service may be recorded in the log.

S812: The telecom service sends the disconnect cause to the dialer.

In this embodiment of this application, the telecom service may deliver the disconnect cause to the dialer by calling back the dialer.

S813: The dialer determines whether the code in the disconnect cause is preset code and whether the description in the disconnect cause is null.

Currently, native logic of Google^{™} Dialer is that a second pop-up box is displayed when the code in the disconnect cause is "ERROR" or "RESTRICTED" and the description in the disconnect cause is not null. The second pop-up box is, for example, the pop-up box 105 shown in FIG. 1B. In this embodiment of this application, the preset code may be "ERROR" and "RESTRICTED".

That is, the dialer determines, by determining whether the code in the disconnect cause is the preset code and whether the description in the disconnect cause is null, whether to display the second pop-up box.

If the code in the disconnect cause is the preset code and the description in the disconnect cause is not null, the dialer displays the second pop-up box. The second pop-up box includes content of the description (Description) in the disconnect cause. For example, the second pop-up box may be the pop-up box 105 shown in FIG. 1B, and the reminder information 105a in the pop-up box 105 may be the content of the description (Description) in the disconnect cause.

If the code in the disconnect cause is not the preset code or the description in the disconnect cause is null, the dialer performs S814 (that is, does not display the second pop-up box).

S814: The dialer does not display the second pop-up box.

In this embodiment of this application, the teleservice sets the description in the disconnect cause to null in S809. Therefore, in S814, the dialer may determine that the description in the disconnect cause is null and therefore no longer display the second pop-up box. In this way, poor experience caused to the user because the terminal device displays a pop-up box a plurality of times can be avoided.

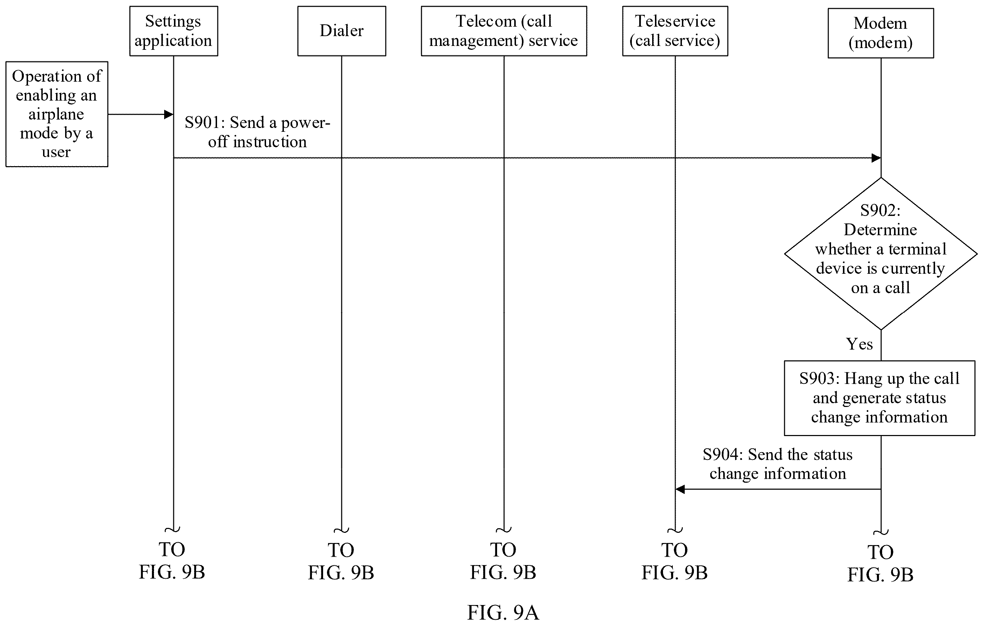

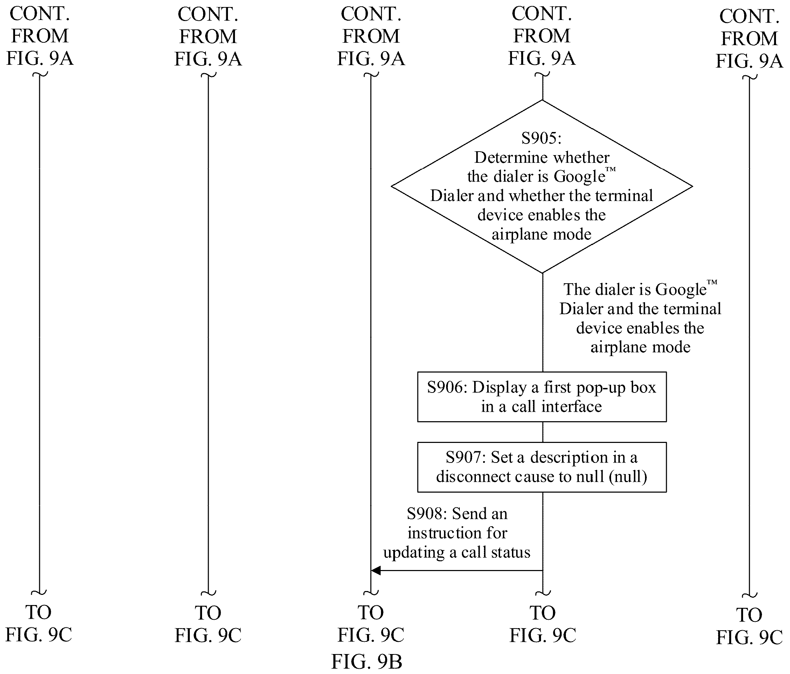

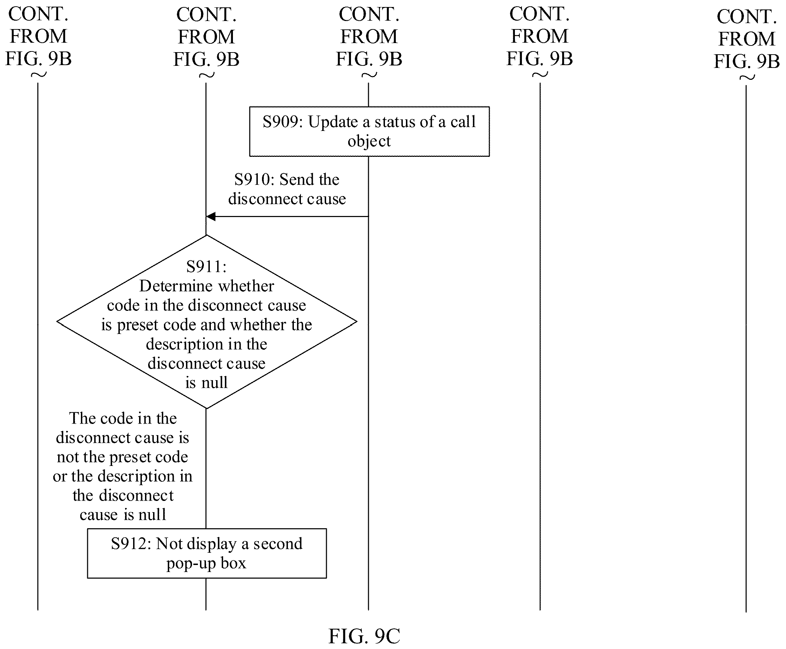

FIG. 9A, FIG. 9B, and FIG. 9C are a schematic flowchart 2 of an interface display method according to an embodiment of this application. The interface display method may be performed by the terminal device shown in FIG. 3, and specifically shows a specific implementation in the call scenario shown in FIG. 7A, FIG. 7B, and FIG. 7C. As shown in FIG. 9A, FIG. 9B, and FIG. 9C, the interface display method includes the following steps.

S901: In response to an operation of enabling an airplane mode by a user, a Settings application sends a power-off instruction to a modem (modem).

For example, the operation of enabling the airplane mode by the user may be an operation performed by the user on the icon of the airplane mode 703 in the pull-down notification bar 702, or may be an operation of enabling the airplane mode in the Settings application by the user.

The Settings application may send the power-off instruction to the modem through an application framework layer and an RIL.

S902: The modem determines whether the terminal device is currently on a call.

In an optional implementation, the modem may determine whether there is a call object in a call list. If there is a call object in the call list, it indicates that the terminal device is currently on a call. If there is no call object in the call list, it indicates that the terminal device is not on a call.

If the terminal device is currently on a call, the modem may perform S903. If the terminal device is currently not on a call, the modem may be directly powered off.

S903: The modem hangs up the call and generates status change information.

The status change information includes a call ID and a hang-up reason. In this embodiment of this application, if the call is hung up because the airplane mode is enabled, the hang-up reason may be set to "radio offf".

S904: The modem sends the status change information to a teleservice.

The modem may send the status change information to the teleservice through the RIL and a call service framework at the application framework layer.

S905: The teleservice determines whether a dialer is Google^{™} Dialer and whether the terminal device enables the airplane mode.

In response to receiving the status change information, the teleservice may further create a disconnect cause (DisconnectCause). As described above, the teleservice creates DisconnectCausee in many cases, and a first pop-up box needs to be displayed only in a specific scenario. Therefore, the teleservice needs to determine whether the dialer is Google^{™} Dialer and whether the terminal device enables the airplane mode.

For a process of determining, by the teleservice, whether the dialer is Google^{™} Dialer and whether the terminal device enables the airplane mode, refer to S806 and S807. Details are not specifically described herein again.

S906: The teleservice displays the first pop-up box in a call interface.

S907: The teleservice sets a description in the disconnect cause to null (null).

S908: The teleservice sends an instruction for updating a call status to a telecom service.

S909: The telecom service updates a status of the call object.

S910: The telecom service sends the disconnect cause to the dialer.

S911: The dialer determines whether code in the disconnect cause is preset code and whether the description in the disconnect cause is null.

S912: The dialer does not display a second pop-up box.

In conclusion, in this embodiment of this application, if the mobile phone receives an operation of dialing a non-emergency number by the user when enabling the airplane mode, or the mobile phone receives the operation of enabling the airplane mode by the user when being on a call with a non-emergency number, the mobile phone may display the first pop-up box in response to the operation. The first pop-up box includes a "Disable" option, and the user may quickly disable the airplane mode by using the "Disable" option without entering the Settings application, a pull-down menu bar, and another interface to disable the airplane mode. In this way, a user operation is simplified and user experience is improved.

An embodiment of this application further provides a terminal device. The terminal device includes a memory and one or more processors. The memory is configured to store computer program code, and the computer program code includes computer instructions. When the computer instructions are executed by the processor, the terminal device is enabled to perform the functions or the steps in the foregoing method embodiments. For a structure of the terminal device, refer to the structure of the terminal device shown in FIG. 3.

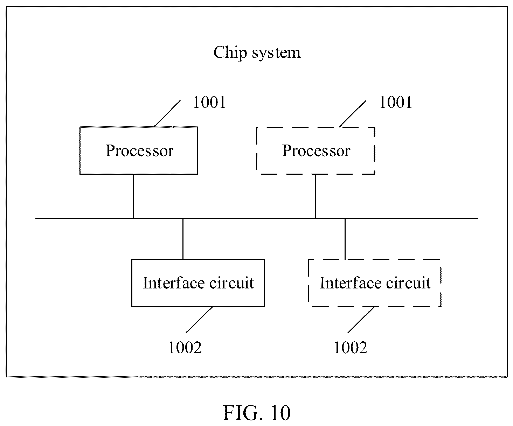

An embodiment of this application further provides a chip system. As shown in FIG. 10, the chip system includes at least one processor 1001 and at least one interface circuit 1002. The processor 1001 and the interface circuit 1002 may be interconnected through a line. For example, the interface circuit 1002 may be configured to receive a signal from another apparatus (for example, a memory of a terminal device). For another example, the interface circuit 1002 may be configured to send a signal to another apparatus (for example, the processor 1001). For example, the interface circuit 1002 may read instructions stored in a memory, and send the instructions to the processor 1001. When the instructions are executed by the processor 1001, the terminal device is enabled to perform the steps in the foregoing embodiments. Certainly, the chip system may further include another discrete device. This is not specifically limited in this embodiment of this application.

An embodiment of this application further provides a computer storage medium. The computer storage medium includes computer instructions. When the computer instructions are run on the foregoing terminal device, the terminal device is enabled to perform the functions or the steps performed by the mobile phone in the foregoing method embodiments.

An embodiment of this application further provides a computer program product. When the computer program product is run on a terminal device, the terminal device is enabled to perform the functions or the steps performed by the mobile phone in the foregoing method embodiments.

It may be understood that to implement the foregoing functions, the terminal device provided in the embodiments of this application includes corresponding hardware structures and/or software modules for performing the functions. It should be readily appreciated by a person skilled in the art that the example units, algorithms, and steps described with reference to the embodiments disclosed in this specification can be implemented in the embodiments of this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in the embodiments of this application, division into the modules is an example, and is merely logical function division. In actual implementation, another division manner may be used.

Based on the foregoing descriptions of the implementations, a person skilled in the art may clearly understand that for convenient and brief description, division into the foregoing functional modules is merely used as an example for description. In actual application, the foregoing functions may be allocated to and completed by different functional modules based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections can be implemented through some interfaces. The indirect couplings or communication connections between the apparatuses or units can be implemented in electronic, mechanical, or other forms.

The units described as separate parts may or may not be physically separate, and parts displayed as units may be one or more physical units, may be located at one position, or may be distributed at different positions. Some or all of the units may be selected based on actual requirements to achieve the objectives of the solutions in the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes any medium that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An interface display method, applied to a terminal device, wherein the method comprises:
displaying a first interface at a first time point, wherein the first interface comprises a dialing button and a first icon, and the first icon indicates that the terminal device is in an airplane mode;
in response to an operation of entering a target number in the first interface by a user, displaying the target number in the first interface, wherein the target number is a non-emergency number;
displaying a second interface in response to an operation of tapping the dialing button in the first interface by the user, wherein the second interface comprises prompt information and a first option, and the prompt information is used to prompt to disable the airplane mode;
obtaining a description in a disconnect cause at a second time point after the user taps the dialing button, wherein the description in the disconnect cause is null, between the first time point and the second time point, the terminal device is in the airplane mode, and receives only one operation of tapping the dialing button by the user, and the second time point is later than the first time point; and
displaying a third interface in response to an operation of tapping the first option in the second interface by the user, wherein the third interface does not comprise the first icon.

2. The method according to claim 1, wherein the third interface comprises the target number and a second icon, and the second icon indicates that the terminal device accesses an operator network.

3. The method according to claim 1 or 2, wherein the method further comprises:
obtaining a reason value in the disconnect cause, wherein the reason value in the disconnect cause is POWER OFF.

4. The method according to any one of claims 1-3, wherein the first interface is an interface of a dialing application, and the displaying a second interface in response to an operation of tapping the dialing button in the first interface by the user comprises:
in response to the operation of tapping the dialing button in the first interface by the user, displaying the second interface when the target number is a non-emergency number, the terminal device is in the airplane mode, and the dialing application is a preset application.

5. The method according to any one of claims 1-4, after the displaying a second interface, further comprising:
setting the description in the disconnect cause to null.

6. The method according to claim 5, wherein the displaying a second interface in response to an operation of tapping the dialing button in the first interface by the user comprises:
creating a connection object in response to the operation of tapping the dialing button in the first interface by the user;
generating the disconnect cause based on a connection object creation failure, wherein the description in the disconnect cause comprises the prompt information; and
displaying the second interface based on the description in the disconnect cause when the dialing application is the preset application.

7. The method according to claim 6, wherein the connection object creation failure is based on the target number being an emergency number and the terminal device being in the airplane mode.

8. The method according to any one of claims 1-7, wherein the terminal device does not display a reminder pop-up box based on the description in the disconnect cause being null, and the reminder pop-up box is a pop-up box of the preset application.

9. An interface display method, applied to a terminal device, wherein the method comprises:
during a call on the terminal device, in response to receiving an operation of enabling an airplane mode by a user, enabling the airplane mode and ending the call;
displaying a first pop-up box if a dialing application is a preset application, wherein the first pop-up box comprises a first option;
disabling the airplane mode in response to a tap operation performed by the user on the first option;
obtaining a disconnect cause after displaying the first pop-up box, wherein a description in the disconnect cause is null; and
not displaying a second pop-up box in response to determining that the description in the disconnect cause is null, wherein the second pop-up box does not comprise an option for disabling the airplane mode.

10. A terminal device, wherein the terminal device comprises a memory and one or more processors, and the memory is coupled to the processor; and
the memory is configured to store computer program code, the computer program code comprises computer instructions, and when the computer instructions are executed by the processor, the terminal device is enabled to perform the method according to any one of claims 1-9.

11. A computer-readable storage medium, comprising computer instructions, wherein when the computer instructions are run on a terminal device, the terminal device is enabled to perform the method according to any one of claims 1-9.
